(19) Europäisches Patentamt
European Patent Office
Office européen des brevets

(11) **EP 3 279 806 A1**

(12) **EUROPEAN PATENT APPLICATION**
published in accordance with Art. 153(4) EPC

(43) Date of publication:
**07.02.2018 Bulletin 2018/06**

(51) Int Cl.:
***G06F 17/30*** *(2006.01)*

(21) Application number: **16771248.8**

(22) Date of filing: **15.03.2016**

(86) International application number:
**PCT/CN2016/076411**

(87) International publication number:
**WO 2016/155493 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.04.2015 CN 201510151908**

(71) Applicant: **Alibaba Group Holding Limited Grand Cayman (KY)**

(72) Inventors:
• **WANG, Dandan**
  **Hangzhou**
  **Zhejiang 310099 (CN)**
• **PAN, Xiaofeng**
  **Hangzhou**
  **Zhejiang 310099 (CN)**
• **XU, Di**
  **Hangzhou**
  **Zhejiang 310099 (CN)**

(74) Representative: **Conroy, John**
  **Fish & Richardson P.C.**
  **Highlight Business Towers**
  **Mies-van-der-Rohe-Straße 8**
  **80807 München (DE)**

(54) **DATA PROCESSING METHOD AND APPARATUS**

(57)    The present application provides a data handling method and apparatus. The method comprises: determining, according to attribute information about a data handling task to be executed, history data handling information corresponding to the data handling task to be executed; acquiring at least two pieces of preference representation information from the history data handling information, wherein the preference representation information can reflect a use preference of history data handling for a data handling mode; and recommending, according to the at least two pieces of preference representation information, a data handling mode from data handling modes used by the history data handling to the data handling task to be executed. The present application uses at least two pieces of information, which can reflect a use preference of history data handling for a data handling mode, for the recommendation of a data handling mode, which can reduce the probability of re-selecting a data handling mode, and facilitate the improvement of the execution efficiency of data handling.

EP 3 279 806 A1

```
┌─────────────────────────────────────────────────────────────────────┐
│ Determining, according to attribute information about a data handling │──100
│ task to be executed, history data handling information corresponding  │
│ to the data handling task to be executed                              │
└─────────────────────────────────────────────────────────────────────┘
                                 │
                                 ▼
┌─────────────────────────────────────────────────────────────────────┐
│ Acquiring at least two pieces of preference representation            │──101
│ information from the history data handling information, wherein the    │
│ preference representation information can reflect a use preference of  │
│ history data handling for a data handling mode                        │
└─────────────────────────────────────────────────────────────────────┘
                                 │
                                 ▼
┌─────────────────────────────────────────────────────────────────────┐
│ Recommending, according to the at least two pieces of preference      │──102
│ representation information, a data handling mode from data handling    │
│ modes used by the history data handling to the data handling task to   │
│ be executed                                                           │
└─────────────────────────────────────────────────────────────────────┘
```

**Fig. 1**

**Description**

**[Technical field]**

The present application relates to the technical field of Internet, and in particular to a data handling method and apparatus.

**[Background art]**

With the development of Internet technologies, there are more and more Internet-based applications, and these applications are becoming increasingly complicated. Generally, the applications involve data handling, and can usually handle data using multiple data handling modes.

In the prior art, a data handling mode with the highest use frequency is selected according to the history use frequencies of data handling modes, and is then recommended to a data handling task to be executed. However, in fact, the data handling mode with the highest use frequency is not necessarily the one that the data handling task to be executed needs, and in this case, it needs to re-select a data handling mode, which thus affects the execution efficiency of data handling.

**[Summary of the invention]**

The present application provides, in multiple aspects, a data handling method and apparatus for recommendation of a data handling mode, thereby improving the execution efficiency of data handling.

The present application provides, in one aspect, a data handling method, comprising:

determining, according to attribute information about a data handling task to be executed, history data handling information corresponding to the data handling task to be executed;

acquiring at least two pieces of preference representation information from the history data handling information, wherein the preference representation information can reflect a use preference of history data handling for a data handling mode; and

recommending, according to the at least two pieces of preference representation information, a data handling mode from data handling modes used by the history data handling to the data handling task to be executed.

The present application provides, in another aspect, a data handling apparatus, comprising:

a determination module, configured to determine, according to attribute information about a data handling task to be executed, history data handling information corresponding to the data handling task to be executed;

an acquisition module, configured to acquire at least two pieces of preference representation information from the history data handling information, wherein the preference representation information can reflect a use preference of history data handling for a data handling mode; and

a recommending module, configured to recommend, according to the at least two pieces of preference representation information, a data handling mode from data handling modes used by the history data handling to the data handling task to be executed.

In the present application, at least two pieces of preference representation information, which can reflect a use preference of history data handling for a data handling mode, are acquired from history data handling information; and according to the acquired at least two pieces of preference representation information, a data handling mode from data handling modes used by the history data handling is recommended to a data handling task to be executed. Since at least two pieces of information, which can reflect a use preference of history data handling for a data handling mode, are used simultaneously for the recommendation of a data handling mode, the recommended data handling mode conforms to the use preference for a data handling mode, and therefore a data handling mode required by the data handling task to be executed can be recommended thereto, and then the data handling task to be executed can be performed directly based on the recommended data handling mode, which can reduce the probability of re-selecting a data handling mode, and facilitate the improvement of the execution efficiency of data handling.

**[Brief description of the accompanying drawings]**

To describe the technical solutions in the embodiments of the present application more clearly, the following briefly introduces the accompanying drawings required for describing the embodiments or the prior art. Obviously, the accompanying drawings in the following description show some embodiments of the present application, and those of ordinary skill in the art may still derive other drawings from the accompanying drawings without creative efforts.

Fig. 1 is a schematic flowchart of a data handling method provided by an embodiment of the present application.

Fig. 2 is a schematic hierarchy diagram of dividing payment modes provided by an embodiment of the present application.

Fig. 3 is a schematic structural diagram of a data handling apparatus provided by an embodiment of the present application.

**[Detailed description]**

In order to make the object, technical solutions and advantages of the embodiments of the present application clearer, the technical solutions of the embodiments of the present application will be described clearly and completely in conjunction with the drawings in the embodiments of the present application. Obviously, the described embodiments are some embodiments, rather than all embodiments, of the present application. Based on the embodiments of the present application, all other embodiments obtained by those of ordinary skill in the art without any creative effort all fall within the scope of protection of the present application.

With the development of applications, the functions achieved thereby are becoming increasingly powerful and complicated. At present, almost all the applications involve data handling. Usually, one data handling process may apply multiple data handling modes; however, the effects brought by different data handling modes are significantly different. During a data handling process, if the recommended data handling mode is not suitable for the data handling process, it is necessary to change the data handling mode, which may thus cause low execution efficiency of data handling. Then, how to recommend a more proper data handling mode, so as to improve the execution efficiency of data handling is an issue. Regarding this issue, the present application provides a data handling method. The main idea of the method is recommending a data handling mode to a data handling task to be executed based on a use preference of history data handling for a data handling mode. In this way, the data handling mode recommended to the data handling task to be executed is a data handling mode that conforms to the use preference of data handling for a data handling mode, and the probability that the data handling mode meets the requirements of the data handling task to be executed is relatively high. Therefore, for the data handling task to be executed, the execution efficiency can be improved. The use preference of the history data handling for a data handling mode can be represented through related information when and/or during the history data handling uses the data handling modes. In order to better represent the use preference of the history data handling when the data handling modes are used, the present application uses at least two pieces of information, which can reflect the use preference of the history data handling when the data handling modes are used, and such information is referred to as preference representation information.

To make a person skilled in the art better understand the technical solutions in the present invention, the following describes in detail the technical solutions in the embodiments of the present invention with reference to the accompanying drawings in the embodiments of the present invention.

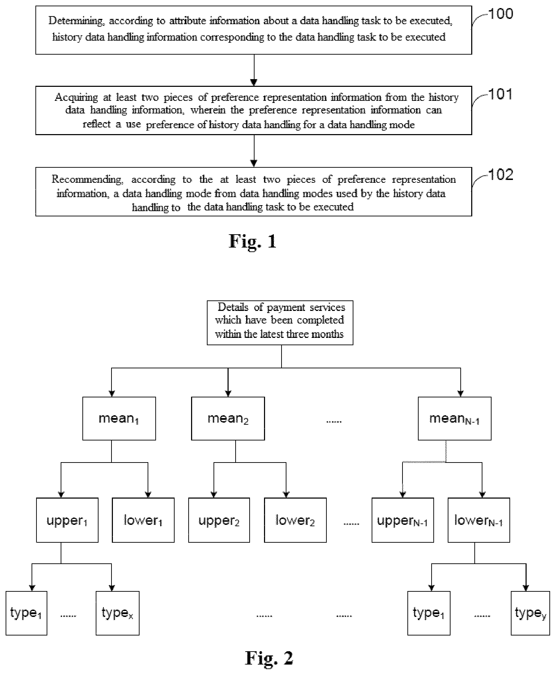

Fig. 1 is a schematic flowchart of a data handling method provided by an embodiment of the present application. As shown in Fig. 1, the method comprises:

100. determining, according to attribute information about a data handling task to be executed, history data handling information corresponding to the data handling task to be executed;

101. acquiring at least two pieces of preference representation information from the history data handling information, wherein the preference representation information can reflect a use preference of history data handling for a data handling mode; and

102. recommending, according to the at least two pieces of preference representation information, a data handling mode from data handling modes used by the history data handling to the data handling task to be executed.

In the present application, the history data handling refers to data handling processes that have been executed and completed, and may involve history data within a recent time period, for example, data within recent three months, and the data handling task to be executed refers to a data handling process to be executed. The history data handling and the data handling task to be executed are data handling processes in the same type of application scenario, and there is no definition on the application scenario. For example, the application scenario of the history data handling and the data handling task to be executed may be a payment service, a download service, a search service, etc. In addition, the history data handling and the data handling task to be executed in the present application may be achieved by applying multiple data handling modes. The data handling mode required to be recommended to the data handling task to be executed may vary depending on different application scenario types. For example, regarding the payment service, the data handling mode required to be recommended may be a data handling mode with a payment function, such as payment modes of various credit cards, bank cards, Tenpay™ and Alipay™.

Specifically, when it is necessary to recommend a data handling mode to a data handling task to be executed, firstly, according to attribute information about the data handling task to be executed, history data handling information corresponding to the data handling task to be executed is determined; then at least two pieces of preference representation information, which can reflect a use preference of history data handling for a data handling mode, are acquired from the history data handling information; and according to the acquired preference representation information, a data handling mode from data handling modes used by the history data handling is recommended to the data handling task to be executed.

The above attribute information about a data handling task to be executed comprises one or any combination of the following: a user identifier of the data handling task to be executed, the value of a data object of the data handling task to be executed, and an execution time point of the data handling task to be executed.

The determining, according to attribute information about a data handling task to be executed, history data handling information corresponding to the data handling task to be executed correspondingly comprises one or any combination of the following:

acquiring history data handling information related to the user identifier of the data handling task to be executed;

acquiring history data handling information when the value of a data object is in an interval range where the value of a data object of the data handling task to be executed is located; and

acquiring history data handling information when an execution time is in a time range where the execution time of the data handling task to be executed is located.

In this embodiment, at least two pieces of preference representation information from the acquired history data handling information are used to represent a use preference of the history data handling when the data handling modes are used, so as to achieve the purpose of recommending a data handling mode to the data handling task to be executed based on the use preference of the history data handling when the data handling modes are used. In this way, the data handling mode recommended to the data handling task to be executed conforms to a use preference of a data handling process for a data handling mode, and the probability that the data handling mode meets the requirements of the data handling task to be executed is relatively high. Therefore, for the data handling task to be executed which relies on the recommended data handling mode, the execution efficiency for the data handling can be improved.

In an optional implementation manner, the preference representation information, which can reflect a use preference of history data handling for a data handling mode, in the history data handling information can comprise, but is not limited to: the type of the history data handling, an execution time of the history data handling (equivalent to the time of the history data handling using a data handling mode in fact), types of the data handling modes used by the history data handling, data objects of the history data handling, position environment where the history data handling is located, etc.

The inventor of the present application has found through a plenty of trials that, in the above preference representation information, information, such as the execution time of the history data handling, the types of the used data handling modes and the data objects of the history data handling, can play a greater role in reflecting a use preference for a data handling mode.

Based on the above finding, in an optional implementation manner of acquiring at least two pieces of reference representation information from the history data handling information, the execution time of the history data handling, the types of the data handling modes used by the history data handling and the data objects of the history data handling can be acquired.

In an optional implementation manner, data handling processes completed before the current time are all history data handling. Considering that there are a large number of history data handling, and history data handling, the execution time of which is far from the current time, has a relative small contribution to the recommendation of a data handling mode to the data handling task to be executed, a time range may be pre-set, and then data handling executed within the time range is acquired, thereby reducing the used data amount of history data handling, and facilitating the improvement of handling speed. The time range may be within three to five days from the current time, or two weeks from the current time, or one to three months from the current time, etc.

Based on the above, the acquiring at least two pieces of reference representation information may be specifically acquiring an execution time of history data handling within a specified time range, types of the data handling modes used by the history data handling within a specified time range and data objects of the history data handling.

Furthermore, an implementation manner of recommending, on the basis of the execution time of the history data handling, the types of the data handling modes used by the history data handling and the data objects of the history data handling acquired above, a data handling mode to the data handling task to be executed comprises:

ranking the data handling modes used by the history data handling according to the execution time of the history data handling, the types of the data handling modes used by the history data handling and the data objects of the history data handling; and

recommending, according to a ranking result, a data handling mode from the data handling modes used by the history data handling to the data handling task to be executed.

The process flow of a specific ranking mode is as follows:

configuring a corresponding weight coefficient respectively to the execution time of the history data handling, the types of the data handling modes used by the history data handling and the data objects of the history data handling; performing, according to a weight system, weighted average on the execution time of the history data handling, the types of the data handling modes used by the history data handling and the data objects of the history data handling, so as to acquire a recommendation weight corresponding to the data handling modes used by the history data handling; then ranking the data handling modes used by the history data handling according to the recommendation weight. For example, ranking the same according to the recommendation weight in a descending order, or ranking the same according to the recommendation weight in an ascending order.

Based on the above implementation manner, after a ranking result is acquired, a data handling mode can be recommended to the data handling task to be executed according to the ranking result. For example, if the data handling modes are ranked according to the recommendation weight in a descending order, the data handling mode ranking first can be recommended to the data handling task to be executed; and if the data handling modes are ranked according to the recommendation weight in an ascending order, the data handling mode ranking last can be recommended to the data handling task to be executed.

The process flow of another specific ranking mode is as follows:

firstly, according to the execution time of the history data handling and the execution time of the data handling task to be executed, a recommendation weight corresponding to the data handling modes used by the history data handling is acquired, wherein the greater the difference between the execution time of the history data handling and the execution time of the data handling task to be executed is, the smaller the recommendation weight corresponding to the data handling modes used by the history data handling is. For example, the recommendation weight corresponding to the data handling modes used by the history data handling can be calculated according to the following formula (1):

$$f_i = \frac{1}{pre\_date - d_i} \quad (1)$$

in formula (1), $f_i$ represents a recommendation weight corresponding to a data handling mode used by the $i$th history data handling; $pre\_date$ represents the execution time of the data handling task to be executed; $d_i$ represents the execution time of the $i$th history data handling; and $i = 1, 2, ..., N$, where $N$ is the number of history data handling.

Then, according to the recommendation weight corresponding to the data handling modes used by the history data handling and the types of the data handling modes used by the history data handling, the data handling modes used by the history data handling are ranked according to the types so as to acquire a first ranking result. The first ranking result is in fact overall ranking of the data handling modes used by the history data handling.

For example, data handling modes of each type can be collected according to the types of the data handling modes used by the history data handling, then recommendation weights corresponding to the data handling modes of each type are accumulated to acquire a recommendation weight corresponding to each type, and according to the recommendation weight corresponding to each type, the data handling modes used by the history data handling are ranked according to the types.

In addition, the data handling modes used by the history data handling are divided into a first type and a second type according to a segmentation point of the data objects of the history data handling, according to a recommendation weight and types corresponding to data handling modes of the first type, the data handling modes of the first type are ranked according to the types so as to acquire a second ranking result, and according to a recommendation weight and types corresponding to data handling modes of the second type, the data handling modes of the second type are ranked according to the types so as to acquire a third ranking result. The second ranking result is in fact ranking of the data handling modes used by the history data handling with the data objects being greater than the segmentation point, and the third ranking result is in fact ranking of the data handling modes used by the history data handling with the data objects being smaller than or equal to the segmentation point.

Specifically, the data handling modes used by the history data handling with the data objects being greater than the segmentation point can be classified into the first type, and the data handling modes used by the history data handling with the data objects being smaller than or equal to the segmentation point can be classified into the second type. With regard to the data handling modes of each type, the data handling modes of each type can be collected according to the types of the data handling modes, then recommendation weights corresponding to the data handling modes of each type are accumulated to acquire a recommendation weight corresponding to each type, and according to the recommendation weight corresponding to each type, the data handling modes of that type are ranked according to the type.

In the above implementation manner, before the data handling modes used by the history data handling are divided into a first type and a second type according to a segmentation point of the data objects of the history data handling, the segmentation point can be acquired. A method for acquiring a segmentation point comprises, but is not limited to:

ranking the data objects of the history data handling; acquiring a mean of two data objects adjacent to each other after the ranking to serve as a candidate segmentation point; calculating, according to the recommendation weight corresponding to the data handling modes used by the history data handling and the types of the data handling modes used by the history data handling, the impurity of the candidate segmentation point; and selecting a candidate segmentation point with the lowest impurity as the above segmentation point.

Formula (2) can be specifically used to calculate the candidate segmentation point.

$$mean_j = \frac{amt_j \pm amt_{j+1}}{2} \quad (2)$$

In formula (2), $mean_j$ represents the $j$th candidate segmentation point; $amt_j$ represents the $j$th data object; $amt_{j+1}$ represents the $j$+1th data object; and $j$ = 1, 2, ..., ($N$-1), where $N$ is the number of history data handling, that is, the number of data objects. "+" or "-" is selected according to the size of two adjacent data objects.

The method for calculating the impurity of the candidate segmentation point comprises:

with regard to each candidate segmentation point, comparing the data objects of the history data handling with the candidate segmentation point respectively, so as to divide the data objects of the history data handling into two types, wherein data objects which are greater than the candidate segmentation point are referred to as class A, and data objects which are smaller than or equal to the candidate segmentation point are referred to as class B.

With regard to class A, the sum of recommendation weights corresponding to the data objects in this class is calculated to be taken as a recommendation weight corresponding to this class, and then a ratio of the recommendation weight corresponding to this class to a total recommendation weight is calculated to be taken as a time influence coefficient. Since the recommendation weight merely involves a time difference between the data handling task to be executed and the history data handling, the time influence coefficient reflects the effect of a time factor in the recommendation. Moreover, the data objects in class A may belong to one or more types. The sum of recommendation weights corresponding to data objects of each type is calculated to be taken as a recommendation weight corresponding to each type in this class, and with regard to each type, a ratio corresponding to the type can be calculated according to the following formula (3), and then the ratios corresponding to all types in this class are accumulated to be taken as a type influence coefficient of class A. Since the recommendation weights are processed in terms of type, the type influence coefficient reflects the effect of the type of a data handling mode in the recommendation.

$$gini_l = \left( \frac{type\_sum_l}{split\_sum_A} \right) \times \left( 1 - \frac{type\_sum_l}{split\_sum_A} \right) \quad (3)$$

In formula (3), $gini_l$ represents a ratio corresponding to type $l$; the sum of recommendation weights corresponding to all data objects of type $l$ is $type\_sum_l = \sum f_l$; and $split\_sum_A$ represents the sum of recommendation weights corresponding to the data objects in class A, wherein the type influence coefficient of class A can be represented as

$$\sum_A gini_l$$

In $l=1,2,...,M$,, $M$ is the maximum number of the types of the data handling modes.

With regard to class B, the sum of recommendation weights corresponding to the data objects in this class is calculated to be taken as a recommendation weight corresponding to this class, and then a ratio of the recommendation weight corresponding to this class to a total recommendation weight is calculated to be taken as a time influence coefficient. Since the recommendation weight merely involves a time difference between the data handling task to be executed and the history data handling, the time influence coefficient reflects the effect of a time factor in the recommendation. Moreover, the data objects in class B may belong to one or more types. The sum of recommendation weights corresponding to data objects of each type is calculated to be taken as a recommendation weight corresponding to each type in this class, and with regard to each type, a ratio corresponding to the type can be calculated according to the following formula (3), and then the ratios corresponding to all types in this class are accumulated to be taken as a type influence coefficient of class B. Since the recommendation weights are processed in terms of type, the type influence coefficient reflects the effect of the type of a data handling mode in the recommendation.

Then, the product of the time influence coefficient and the type influence coefficient of class A are acquired, the product of the time influence coefficient and the type influence coefficient of class B are acquired, and the two products are added to be taken as the impurity of the candidate segmentation point.

When the impurities of all candidate segmentation points are calculated using the above method, a candidate segmentation point corresponding to the smallest impurity is selected to be taken as the segmentation point used above.

In an optional implementation manner, a mean of various candidate segmentation points can be further acquired, and a difference between the mean of the candidate segmentation points and the above segmentation point is taken as a variation coefficient of the data objects of the history data handling. For example, the variation coefficient can be a Gini coefficient.

The method for recommending, based on the above ranking result, a data handling mode from the data handling modes used by the history data handling to the data handling task to be executed comprises:

comparing the variation coefficient of the data objects of the history data handling with a pre-set threshold,

wherein if the above variation coefficient of the data objects of the history data handling is less than a pre-set threshold, it is indicated that the size of the data objects is relative smooth, which has a relative small impact on the recommendation process, and thus during the recommendation of a data handling mode to the data handling task to be executed, the impact of data objects can be ignored, and then according to the first ranking result, a data handling mode is recommended to the data handling task to be executed; and

if the above variation coefficient of the data objects of the history data handling is greater than or equal to the pre-set threshold, it is indicated that the size of the data objects varies significant, which has a relative great impact on the recommendation process, and thus during the recommendation of a data handling mode to the data handling task to be executed, the impact of data objects should be taken into consideration, and then according to a size relationship between the data object of the data handling task to be executed and the segmentation point, it is determined to recommend a data handling mode to the data handling task to be executed according to the second ranking result or the third ranking result.

When the data object of the data handling task to be executed is greater than the segmentation point, it is determined to use the second ranking result to recommend a data handling mode to the data handling task to be executed; and when the data object of the data handling task to be executed is smaller than or equal to the segmentation point, it is determined to use the third ranking result to recommend a data handling mode to the data handling task to be executed.

It can be seen from above that during the recommendation of a data handling mode to the data handling task to be executed, apart from the consideration of the execution time of the history data handling and the types of the used data handling modes, the data objects of the history data handling can be further distinguished, and if the impact of the data objects is relatively great, the impact of the data objects is taken into consideration, otherwise, the impact of the data objects is ignored; therefore, the accuracy of the recommended data handling mode can be further improved.

Furthermore, in consideration of a great amount of application scenarios, in order to help the technical solutions of the present application fully exert their advantages, the application scenarios applicable to the technical solutions of the present application can be pre-set. On this basis, before determining, according to attribute information about a data handling task to be executed, history data handling information corresponding to the data handling task to be executed, whether an application scenario of the data handling task to be executed belongs to a pre-set application scenario can be determined; and if a determination result is yes, the operation of determining, according to attribute information about a data handling task to be executed, history data handling information corresponding to the data handling task to be executed and subsequent operations are executed. If the determination result is no, the technical solution of the present application may not be used, for example, an existing solution may be used to recommend a data handling mode to the data handling task to be executed.

To make a person skilled in the art better understand the technical solutions of the present application, the following description is made with reference to the specific application scenarios. In the following embodiment, taking both the history data handling and the data handling task to be executed being payment processes in a payment service as an example, the above data handling mode is specifically a payment mode, such as credit card, bank card and Alipay™, required for completing a payment process. Correspondingly, the payment amount involved in the payment service can be taken as the above data object.

With the rapid development of the Internet, on-line payment has become the first choice of more and more netizens for payment. At present, more and more payment applications start to vigorously promote a super simple cashier desk, and only one payment mode appears in the super simple cashier desk. When the payment mode is not what a user wants, the user needs to make a switch, which may affect the payment efficiency and cause a bad user experience.

With regard to the above issues, this embodiment comprehensively considers various factors, such as a payment time of a payment service which has been completed, the type of payment mode used during a payment operation and the payment amount, which can reflect a user preference of a user for a payment mode when performing a payment service, so as to recommend a proper and required payment mode for a service to be paid, thereby improving the payment efficiency.

Specifically, the details of payment services which have been completed by the user via the super simple cashier desk within a certain time period (for example, the latest three months) can be collected, including the payment time of each payment service, a user ID involved in each payment service, a payment mode used for each payment service, the payment amount of each payment service, etc.

Optionally, the types of payment modes used by payment services which have been completed within the latest three months are counted; if a counting result is one, it is indicated that the payment services which have been completed within the latest three months all use the same type of payment mode, for example, using the same bank card for payment, and then this payment mode can be directly recommended to a service to be paid; and if the counting result is being greater than one, then a payment mode can be recommended to the service to be paid according to information about the payment services which have been completed within the latest three months, such as the payment time, the types of payment modes used and the payment amount involved.

The implementation process of recommending a payment mode to the service to be paid when the above counting result is being greater than one is described in detail in conjunction with the schematic structural diagram shown in Fig. 2:

Assuming there are a total of $N$ payment services which have been completed within the latest three months, the payment time of each payment service which has been completed is identified as $d$, for example, the payment time of the $i$th payment service which has been completed is $d_i$, the payment amount of each payment service which has been completed is identified as $amt$, for example, the payment amount of the $i$th payment service which has been completed is $amt_i$, where $i = 1, 2,..., N$; and the payment time of the service to be paid is identified as $pre\_date$.

First step, according to the above formula (1), a recommendation weight of a payment mode used by each payment service is calculated.

Second step, a segmentation point of the payment amount is calculated, and this step specifically comprises the following operations:

1) Ranking the payment amount of payment services which have been completed within the latest three months, and then according to the above formula (2), calculating $N$-1 candidate segmentation points, and identifying the candidate segmentation points as $mean$, for example, the $j$th candidate segmentation point being $mean_j$.

2) Classifying N payment services which have been completed respectively taking each candidate segmentation point as a standard.

Specifically, services which have been completed with the payment amount being greater than the candidate segmentation point are classified as one class, identified as *upper*; and services which have been completed with the payment amount being smaller than or equal to the candidate segmentation point are classified as another class, identified as *lower*. For example, two types divided by the *j*th candidate segmentation point are $upper_j$ and $lower_j$. In addition, the sum of recommendation weights corresponding to the payment modes used by all the payment services which have been completed is calculated to be taken as a total recommendation weight, identified as *mean_sum*. The total recommendation weight is the same to each candidate segmentation point.

3) Acquiring a time influence coefficient for each type under each candidate segmentation point.

Taking $upper_j$ divided by the *j*th candidate segmentation point as an example, assuming that the $upper_j$ has *m* payment services which have been completed, then according to formula (4), the sum of recommendation weights corresponding to $upper_j$ is calculated, and then according to formula (5), a time influence coefficient is calculated.

$$split\_sum_j = \sum_m f_k \quad (4)$$

$$sigtime_j = \frac{split\_sum_j}{mean\_sum} \quad (5)$$

By the same reasoning, a time influence coefficient of $lower_j$ is calculated.

Furthermore, time influence coefficients of two types divided by other candidate segmentation points are calculated.

4) Acquiring a type influence coefficient for each type under each candidate segmentation point.

Taking $upper_j$ divided by the *j*th candidate segmentation point as an example, assuming that the $upper_j$ has *m* payment services which have been completed, comprising *L* payment types, then according to formula (6), the sum of recommendation weights corresponding to each payment type is calculated, and then according to formula (3), a ratio corresponding to each payment type is calculated; furthermore, according to formula (7), a type influence coefficient of $upper_j$ is calculated.

$$type\_sum_l = \sum_x f_l \quad (6)$$

$$sigma_j = sum(gini_l) \quad (7)$$

In formula (6), assuming the number of payment modes under type *l* is *x*, formula (6) is specifically summation of recommendation weights corresponding to *x* payment modes under type *l*. The number of payment modes under different types may be different.

By the same reasoning, a type influence coefficient of $lower_j$ is calculated.

Furthermore, type influence coefficients of two types divided by other candidate segmentation points are calculated.

5) Calculating the impurity of each candidate segmentation point.

Taking the *j*th candidate segmentation point as an example, the impurity thereof can be calculated according to formula (8).

$$mean\_impurity_j = \sum sigtime_j \times sigma_j \quad (8)$$

Third step, a candidate segmentation point with the lowest impurity is selected from all the candidate segmentation points as an amount segmentation point.

Fourth step, a variation coefficient is acquired, payment modes used by payment services which have been completed are ranked, and information such as a ranking result, the variation coefficient and the amount segmentation point is output.

The ranking of payment modes used by payment services which have been completed comprises: according to a recommendation weight corresponding to the payment modes used by the payment services which have been completed and the types of the payment modes, ranking the payment modes used by the payment services which have been completed according to the types, so as to acquire a first ranking result (i.e., an overall ranking result); and dividing, according to the amount segmentation point, the payment modes used by the payment services which have been completed into a first type and a second type (payment modes used by payment services which have been completed and the payment amount of which is greater than the amount segmentation point are classified into the first type, and payment modes used by payment services which have been completed and the payment amount of which is smaller than the amount segmentation point are classified into the second type), ranking, according to a recommendation weight and types corresponding to payment modes of the first type, the payment modes of the first type according to the types so as to acquire a second ranking result (a ranking result of being greater than the amount segmentation point), and ranking, according to a recommendation weight and types corresponding to payment modes of the second type, the payment modes of the second type according to the types so as to acquire a third ranking result (a ranking result of being less than the amount segmentation point).

Furthermore, the method for the above outputting information such as a ranking result, the variation coefficient and the amount segmentation point can be: taking a user ID as a major key, and outputting the above amount segmentation point, the first ranking result, the second ranking result, the third ranking result and the variation coefficient as one data record.

Then, based on a result of the above output, a payment mode is recommended to the service to be paid.

The specific recommendation process is as follows:

The above variation coefficient is compared with a pre-set threshold, wherein the pre-set threshold can be, but is not limited to, 0.5.

If the above variation coefficient is less than the pre-set threshold, it is indicated that the payment amount is relative smooth, which has a relative small impact on the recommendation process, and thus during the recommendation of a payment mode to the service to be paid, the impact of payment amount can be ignored, and then according to the first ranking result (i.e., an overall ranking result), a payment mode is recommended to the service to be paid.

If the above variation coefficient is greater than or equal to the pre-set threshold, it is indicated that the payment amount varies significant, which has a relative great impact on the recommendation process, and thus during the recommendation of a payment mode to the service to be paid, the impact of payment amount should be taken into consideration, and then according to a size relationship between the payment amount of the service to be paid and the amount segmentation point, it is determined to recommend a payment mode to the service to be paid according to the second ranking result (a ranking result of being greater than the amount segmentation point) or the third ranking result (a ranking result of being less than the amount segmentation point). Specifically, when the payment amount of the service to be paid is greater than the amount segmentation point, the second ranking result is used to recommend a payment mode to the service to be paid; and when the payment amount of the service to be paid is smaller than the amount segmentation point, the third ranking result is used to recommend a payment mode to the service to be paid.

The inventor has found through a great number of experiments that the accuracy rate may reach 87% by using the method provided by this embodiment to recommend a payment mode to a service to be paid via the super simple cashier desk, while the accuracy rate is 79% by using a default method in the prior art to recommend the last payment mode used to the service to be paid. The accuracy rate in this embodiment is increased by eight percent compared with the previous method.

It can be seen from above that the technical solution provided by the present application is applied to the payment scenario. Multi-dimensional information of a user is collected, such as the payment time of payment services which have been completed within a specified time via the super simple cashier desk, the types of the used payment modes, and the payment amount involved, and the information is used to reflect a use habit of the user for a payment mode when performing a payment service over the super simple cashier desk; information required for the recommendation to a service to be paid is then output; and a payment mode is recommended to the service to be paid based on the output information. Such recommendation method can fully respect the user's use habit for the payment mode and reduce the switch of the payment mode, thereby improving the efficiency of the payment service and optimize the user experience.

It should be noted that, for brevity, each of the foregoing method embodiments is represented as a series of actions. However, a person skilled in the art should be aware that the present application is not limited to the order of the described actions because according to the present application, some steps may adopt other order or may occur simultaneously. In addition, a person skilled in the art should understand that the embodiments described in the specification are preferred embodiments and that actions and modules involved in these embodiments are not necessarily required for the present application.

In the foregoing embodiments, the description of each embodiment has respective focuses. For a part that is not described in detail in an embodiment, reference may be made to related descriptions in other embodiments.

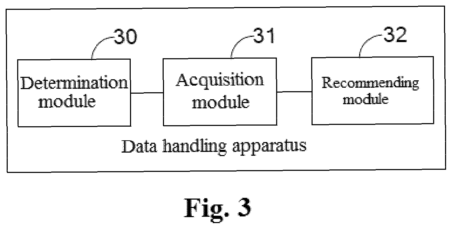

Fig. 3 is a schematic structural diagram of a data handling apparatus provided by an embodiment of the present application. As shown in Fig. 3, the apparatus comprises: a determination module 30, an acquisition module 31 and a recommending module 32.

The determination module 30 is configured to determine, according to attribute information about a data handling task to be executed, history data handling information corresponding to the data handling task to be executed.

The acquisition module 31 is configured to acquire at least two pieces of preference representation information from the history data handling information determined by the determination module 30, wherein the preference representation information can reflect a use preference of history data handling for a data handling mode.

The recommending module 32 is configured to recommend, according to the at least two pieces of preference representation information acquired by the acquisition module 31, a data handling mode from data handling modes used by the history data handling to the data handling task to be executed.

Optionally, the above attribute information about a data handling task to be executed comprises one or any combination of the following: a user identifier of the data handling task to be executed, the value of a data object of the data handling task to be executed, and an execution time of the data handling task to be executed.

Correspondingly, the determination module 30 is specifically configured to execute one or any combination of the following operations:

acquiring history data handling information related to the user identifier of the data handling task to be executed;

acquiring history data handling information when the value of a data object is in an interval range where the value of a data object of the data handling task to be executed is located; and

acquiring history data handling information when an execution time is in a time range where the execution time of the data handling task to be executed is located.

In an optional implementation manner, the acquisition module 31 is specifically configured to acquire, from the history data handling information, an execution time of the history data handling, types of the data handling modes used by the history data handling and data objects of the history data handling.

In an optional implementation manner, the recommending module 32 is specifically configured to rank the data handling modes used by the history data handling according to the execution time of the history data handling, the types of the data handling modes used by the history data handling and the data objects of the history data handling; and recommend, according to a ranking result, a data handling mode from the data handling modes used by the history data handling to the data handling task to be executed.

Furthermore, when ranking the data handling modes used by the history data handling, the recommending module 32 can be specifically configured to
acquire, according to the execution time of the history data handling and the execution time of the data handling task to be executed, a recommendation weight corresponding to the data handling modes used by the history data handling, wherein the greater the difference between the execution time of the history data handling and the execution time of the data handling task to be executed is, the smaller the recommendation weight corresponding to the data handling modes used by the history data handling is;
rank, according to the recommendation weight corresponding to the data handling modes used by the history data handling and the types of the data handling modes used by the history data handling, the data handling modes used by the history data handling according to the types so as to acquire a first ranking result; and
divide the data handling modes used by the history data handling into a first type and a second type according to a segmentation point of the data objects of the history data handling, rank, according to a recommendation weight and types corresponding to data handling modes of the first type, the data handling modes of the first type according to the types so as to acquire a second ranking result, and rank, according to a recommendation weight and types corresponding to data handling modes of the second type, the data handling modes of the second type according to the types so as to acquire a third ranking result.

In an optional implementation manner, when ranking the data handling modes used by the history data handling, the recommending module 32 is further configured to
rank, according to the size of the data objects of the history data handling, the data objects of the history data handling;
acquire a mean of two data objects adjacent to each other after the ranking to serve as a candidate segmentation point;
calculate, according to the recommendation weight corresponding to the data handling modes used by the history data handling and the types of the data handling modes used by the history data handling, the impurity of the candidate segmentation point; and

select a candidate segmentation point with the lowest impurity as the segmentation point.

In an optional implementation manner, when ranking the data handling modes used by the history data handling, the recommending module 32 is further configured to acquire a difference between a mean of the candidate segmentation points and the segmentation point to serve as a variation coefficient of the data objects of the history data handling.

In an optional implementation manner, when recommending a data handling mode to the data handling task to be executed, the recommending module 32 is specifically configured to

if the variation coefficient of the data objects of the history data handling is less than a pre-set threshold, recommend, according to the first ranking result, a data handling mode to the data handling task to be executed; and

if the variation coefficient of the data objects of the history data handling is greater than or equal to the pre-set threshold, according to a relationship between the data object of the data handling task to be executed and the segmentation point, determine to recommend a data handling mode to the data handling task to be executed according to the second ranking result or the third ranking result.

In an optional implementation manner, the determination module 30 is specifically configured to determine whether an application scenario of the data handling task to be executed belongs to a pre-set application scenario; and if a determination result is yes, execute the operation of determining, according to attribute information about a data handling task to be executed, history data handling information corresponding to the data handling task to be executed. The pre-set application scenario refers to an application scenario where the use of the apparatus provided by this embodiment for data handling can produce certain beneficial effects, or an application scenario which is simply believed to be suitable for the use of the apparatus provided by this embodiment for data handling.

The data handling apparatus provided by this embodiment acquires at least two pieces of preference representation information, which can reflect a use preference of history data handling for a data handling mode, from history data handling information, and recommends, according to the acquired at least two pieces of preference representation information, a data handling mode from data handling modes used by the history data handling to a data handling task to be executed. Since at least two pieces of information, which can reflect a use preference of history data handling for a data handling mode, are used simultaneously for the recommendation of a data handling mode, the recommended data handling mode conforms to the use preference for a data handling mode, and therefore a data handling mode required by the data handling task to be executed can be recommended thereto, and then the data handling task to be executed can be performed directly based on the recommended data handling mode, which can reduce the probability of re-selecting a data handling mode, and facilitate the improvement of the execution efficiency of data handling.

It may be clearly understood by a person skilled in the art that, for the purpose of convenient and brief description, for a detailed working process of the foregoing system, apparatus and unit, refer to a corresponding process in the foregoing method embodiments, and details are not described herein again.

In the several embodiments provided in the present application, it should be understood that, the disclosed system, apparatus and method may be implemented in other manners. For example, the described apparatus embodiments are merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions in the embodiments.

In addition, functional units in each embodiment of the present application may be integrated into one processing unit, or each of the units may exist alone physically, or two or more units are integrated into one unit. The foregoing integrated unit may be implemented in a form of hardware, or may be implemented in a form of hardware in addition to a software functional unit.

The integrated unit implemented in form of a software functional unit may be stored in a computer readable storage medium. The software functional unit is stored in a storage medium and includes several instructions for instructing a computer device (which may be a personal computer, a data handling mode machine, or a network device) or a processor (processor) to perform a part of the steps of the methods described in the embodiments of the present application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Lastly, it should be noted that, the above embodiments are only used to describe the technical solutions of the present application and are not intended to define the present application. Although the present application is described in detail with the above embodiments, it should be apparent to those of ordinary skill in the art that modifications may be made to the technical solutions described in the above embodiments, or equivalent replacements may be performed on parts of technical features of the technical solutions. The modifications and replacement do not make the essence of the corresponding technical solution separate from the spirit and scope of the technical solutions in embodiments of the present application.

**Claims**

1.  A data handling method, **characterized by** comprising:

    determining, according to attribute information about a data handling task to be executed, history data handling information corresponding to the data handling task to be executed;
    acquiring at least two pieces of preference representation information from the history data handling information, wherein the preference representation information can reflect a use preference of history data handling for a data handling mode; and
    recommending, according to the at least two pieces of preference representation information, a data handling mode from data handling modes used by the history data handling to the data handling task to be executed.

2.  The method according to claim 1, **characterized in that** the attribute information about a data handling task to be executed comprises one or any combination of the following: a user identifier of the data handling task to be executed, the value of a data object of the data handling task to be executed, and an execution time of the data handling task to be executed; and
    the determining, according to attribute information about a data handling task to be executed, history data handling information corresponding to the data handling task to be executed correspondingly comprises one or any combination of the following:

    acquiring history data handling information related to the user identifier of the data handling task to be executed;
    acquiring history data handling information when the value of a data object is in an interval range where the value of a data object of the data handling task to be executed is located; and
    acquiring history data handling information when an execution time is in a time range where the execution time of the data handling task to be executed is located.

3.  The method according to claim 1 or 2, **characterized in that** the acquiring at least two pieces of preference representation information from the history data handling information comprises:

    acquiring, from the history data handling information, an execution time of the history data handling, types of the data handling modes used by the history data handling and data objects of the history data handling.

4.  The method according to claim 3, **characterized in that** the recommending, according to the at least two pieces of preference representation information, a data handling mode from data handling modes used by the history data handling to the data handling task to be executed comprises:

    ranking the data handling modes used by the history data handling according to the execution time of the history data handling, the types of the data handling modes used by the history data handling and the data objects of the history data handling; and
    recommending, according to a ranking result, a data handling mode from the data handling modes used by the history data handling to the data handling task to be executed.

5.  The method according to claim 4, **characterized in that** the ranking the data handling modes used by the history data handling according to the execution time of the history data handling, the types of the data handling modes used by the history data handling and the data objects of the history data handling comprises:

    acquiring, according to the execution time of the history data handling and the execution time of the data handling task to be executed, a recommendation weight corresponding to the data handling modes used by the history data handling, wherein the greater the difference between the execution time of the history data handling and the execution time of the data handling task to be executed is, the smaller the recommendation weight corresponding to the data handling modes used by the history data handling is;

ranking, according to the recommendation weight corresponding to the data handling modes used by the history data handling and the types of the data handling modes used by the history data handling, all the data handling modes used by the history data handling according to the types so as to acquire a first ranking result; and dividing the data handling modes used by the history data handling into a first type and a second type according to a segmentation point of the data objects of the history data handling, ranking, according to a recommendation weight and types corresponding to data handling modes of the first type, the data handling modes of the first type according to the types so as to acquire a second ranking result, and ranking, according to a recommendation weight and types corresponding to data handling modes of the second type, the data handling modes of the second type according to the types so as to acquire a third ranking result.

6. The method according to claim 5, **characterized by**, before the dividing the data handling modes used by the history data handling into a first type and a second type according to a segmentation point of the data objects of the history data handling, comprising:

ranking, according to the size of the data objects of the history data handling, the data objects of the history data handling;
acquiring a mean of two data objects adjacent to each other after the ranking to serve as a candidate segmentation point;
calculating, according to the recommendation weight corresponding to the data handling modes used by the history data handling and the types of the data handling modes used by the history data handling, the impurity of the candidate segmentation point; and
selecting a candidate segmentation point with the lowest impurity as the segmentation point.

7. The method according to claim 6, **characterized by** further comprising:

acquiring a difference between a mean of the candidate segmentation points and the segmentation point to serve as a variation coefficient of the data objects of the history data handling.

8. The method according to claim 5, **characterized in that** the recommending, according to a ranking result, a data handling mode from the data handling modes used by the history data handling to the data handling task to be executed comprises:

if the variation coefficient of the data objects of the history data handling is less than a pre-set threshold, recommending, according to the first ranking result, a data handling mode to the data handling task to be executed; and
if the variation coefficient of the data objects of the history data handling is greater than or equal to the pre-set threshold, according to a size relationship between the data object of the data handling task to be executed and the segmentation point, determining to recommend a data handling mode to the data handling task to be executed according to the second ranking result or the third ranking result.

9. The method according to claim 1 or 2, **characterized by**, before the determining, according to attribute information about a data handling task to be executed, history data handling information corresponding to the data handling task to be executed, further comprising:

determining whether an application scenario of the data handling task to be executed belongs to a pre-set application scenario; and
if a determination result is yes, executing the operation of determining, according to attribute information about a data handling task to be executed, history data handling information corresponding to the data handling task to be executed.

10. A data handling apparatus, **characterized by** comprising:

a determination module, configured to determine, according to attribute information about a data handling task to be executed, history data handling information corresponding to the data handling task to be executed;
an acquisition module, configured to acquire at least two pieces of preference representation information from the history data handling information, wherein the preference representation information can reflect a use preference of history data handling for a data handling mode; and
a recommending module, configured to recommend, according to the at least two pieces of preference representation information, a data handling mode from data handling modes used by the history data handling to the data handling task to be executed.

11. The apparatus according to claim 10, **characterized in that** the attribute information about a data handling task to be executed comprises one or any combination of the following: a user identifier of the data handling task to be executed, the value of a data object of the data handling task to be executed, and an execution time of the data handling task to be executed; and

the determination module is specifically configured to execute one or any combination of the following operations:

acquiring history data handling information related to the user identifier of the data handling task to be executed;
acquiring history data handling information when the value of a data object is in an interval range where the value of a data object of the data handling task to be executed is located; and
acquiring history data handling information when an execution time is in a time range where the execution time of the data handling task to be executed is located.

12. The apparatus according to claim 10 or 11, **characterized in that** the acquisition module is specifically configured to acquire, from the history data handling information, an execution time of the history data handling, types of the data handling modes used by the history data handling and data objects of the history data handling.

13. The apparatus according to claim 12, **characterized in that** the recommending module is specifically configured to rank the data handling modes used by the history data handling according to the execution time of the history data handling, the types of the data handling modes used by the history data handling and the data objects of the history data handling; and

recommend, according to a ranking result, a data handling mode from the data handling modes used by the history data handling to the data handling task to be executed.

14. The apparatus according to claim 13, **characterized in that** the recommending module is specifically configured to acquire, according to the execution time of the history data handling and the execution time of the data handling task to be executed, a recommendation weight corresponding to the data handling modes used by the history data handling, wherein the greater the difference between the execution time of the history data handling and the execution time of the data handling task to be executed is, the smaller the recommendation weight corresponding to the data handling modes used by the history data handling is;

rank, according to the recommendation weight corresponding to the data handling modes used by the history data handling and the types of the data handling modes used by the history data handling, the data handling modes used by the history data handling according to the types so as to acquire a first ranking result; and
divide the data handling modes used by the history data handling into a first type and a second type according to a segmentation point of the data objects of the history data handling, rank, according to a recommendation weight and types corresponding to data handling modes of the first type, the data handling modes of the first type according to the types so as to acquire a second ranking result, and rank, according to a recommendation weight and types corresponding to data handling modes of the second type, the data handling modes of the second type according to the types so as to acquire a third ranking result.

15. The apparatus according to claim 14, **characterized in that** the recommending module is further configured to rank, according to the size of the data objects of the history data handling, the data objects of the history data handling;
acquire a mean of two data objects adjacent to each other after the ranking to serve as a candidate segmentation point;
calculate, according to the recommendation weight corresponding to the data handling modes used by the history data handling and the types of the data handling modes used by the history data handling, the impurity of the candidate segmentation point; and
select a candidate segmentation point with the lowest impurity as the segmentation point.

16. The apparatus according to claim 15, **characterized in that** the recommending module is further configured to acquire a difference between a mean of the candidate segmentation points and the segmentation point to serve as a variation coefficient of the data objects of the history data handling.

17. The apparatus according to claim 14, **characterized in that** the recommending module is specifically configured to if the variation coefficient of the data objects of the history data handling is less than a pre-set threshold, recommend, according to the first ranking result, a data handling mode to the data handling task to be executed; and
if the variation coefficient of the data objects of the history data handling is greater than or equal to the pre-set threshold, according to a size relationship between the data object of the data handling task to be executed and the segmentation point, determine to recommend a data handling mode to the data handling task to be executed according to the second ranking result or the third ranking result.

18. The apparatus according to claim 10 or 11, **characterized in that** the determination module is specifically configured to
determine whether an application scenario of the data handling task to be executed belongs to a pre-set application scenario; and if a determination result is yes, execute the operation of determining, according to attribute information about a data handling task to be executed, history data handling information corresponding to the data handling task to be executed.

Determining, according to attribute information about a data handling task to be executed, history data handling information corresponding to the data handling task to be executed ⌐100

Acquiring at least two pieces of preference representation information from the history data handling information, wherein the preference representation information can reflect a use preference of history data handling for a data handling mode ⌐101

Recommending, according to the at least two pieces of preference representation information, a data handling mode from data handling modes used by the history data handling to the data handling task to be executed ⌐102

**Fig. 1**

Details of payment services which have been completed within the latest three months

$mean_1$   $mean_2$   ......   $mean_{N-1}$

$upper_1$   $lower_1$   $upper_2$   $lower_2$   ......   $upper_{N-1}$   $lower_{N-1}$

$type_1$ ...... $type_x$   ......   ......   $type_1$ ...... $type_y$

**Fig. 2**

Fig. 3

EP 3 279 806 A1

# INTERNATIONAL SEARCH REPORT

International application No.

**PCT/CN2016/076411**

### A. CLASSIFICATION OF SUBJECT MATTER

G06F 17/30 (2006.01) i

According to International Patent Classification (IPC) or to both national classification and IPC

### B. FIELDS SEARCHED

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

USTXT; CPRSABS; EPTXT; CNTXT; CNABS; VEN; CNKI: (data processing, preference, recommend+, attribute, algorithm, scenarios)

### C. DOCUMENTS CONSIDERED TO BE RELEVANT

| Category* | Citation of document, with indication, where appropriate, of the relevant passages | Relevant to claim No. |
|---|---|---|
| A | CN 101005490 A (INSTITUTE OF COMPUTING TECHNOLOGY, CHINESE ACADEMY OF SCIENCES), 25 July 2007 (25.07.2007), the whole document | 1-18 |
| A | CN 103116581 A (ALIBABA GROUP HOLDING LTD.), 22 May 2013 (22.05.2013), the whole document | 1-18 |
| A | CN 102467577 A (SONY CORP.), 23 May 2012 (23.05.2012), the whole document | 1-18 |
| A | US 2010088151 A1 (KIM, D.H. et al.), 08 April 2010 (08.04.2010), the whole document | 1-18 |

☐ Further documents are listed in the continuation of Box C.　　☒ See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| 18 May 2016 (18.05.2016) | **12 June 2016 (12.06.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WANG, Yankun**<br><br>Telephone No.: (86-10) **62089282** |

Form PCT/ISA/210 (second sheet) (July 2009)

## INTERNATIONAL SEARCH REPORT
### Information on patent family members

International application No.

**PCT/CN2016/076411**

| Patent Documents referred in the Report | Publication Date | Patent Family | Publication Date |
|---|---|---|---|
| CN 101005490 A | 25 July 2007 | CN 101005490 B | 02 June 2010 |
| CN 103116581 A | 22 May 2013 | HK 1181503 A0 | 08 November 2013 |
| CN 102467577 A | 23 May 2012 | EP 2453372 A2 | 16 May 2012 |
| | | US 8832005 B2 | 09 September 2014 |
| | | JP 5578040 B2 | 27 August 2014 |
| | | AU 2011235919 A1 | 31 May 2012 |
| | | US 2012123977 A1 | 17 May 2012 |
| | | JP 2012108592 A | 07 June 2012 |
| | | EP 2453372 A3 | 29 August 2012 |
| US 2010088151 A1 | 08 April 2010 | KR 100997541 B1 | 30 November 2010 |
| | | KR 20100039773 A | 16 April 2010 |